# EUROPEAN PATENT APPLICATION

(11) **EP 2 372 206 A1**
(43) Date of publication of application: **05.10.2011**
(21) Application number: 10250554.2
(22) Date of filing: 24.03.2010
(51) Int. Cl.: F16L 1/26

(54) **Spool piece**

(71) Applicant: BP Exploration Operating Company Limited, Sunbury on Thames Middlesex TW16 7BP (GB)
(72) Inventor: The designation of the inventor has not yet been filed
(74) Representative: Ford, Louise Diane

(57) **Abstract**

A spool piece for coupling between two subsea connection points and a method of making such a spool piece are provided. The method comprises the steps of: i) identifying a location on the sea bed having a pre-defined geometry relative to a first subsea connection point, the pre-defined geometry comprising a curved part between two straight sections, the curved part having a bend radius (R) of between 10m and 20m and an arc length (α) between 55° and 65° and the straight sections each having a length (1) of between 6m and 9m; ii) positioning a second subsea connection point at or near said location; iii) measuring the actual geometry of the second subsea connection point relative to the first subsea connection point; iv) providing a first section of pipe which is straight and has the length (1), a second section of pipe which is straight and is longer than the first section of pipe, and a third section of pipe which comprises a curved part having the bend radius (R) and the arc length (α); v) comparing the actual geometry of the second subsea connection point relative to the first subsea connection point and the geometry formed if the third section of pipe is coupled between the first section of pipe and the second section of pipe to determine whether the length of the second and/or third sections of pipe should be shortened, and shortening the second and/or third section of pipe if required; and vi) connecting the third section of pipe between the first and second sections of pipe to produce a conduit and providing coupling means on both ends of the conduit thereby forming the spool piece.

## Description

This invention relates to a spool piece and a method of making a spool piece for use in inserting coiled tubing into a subsea pipeline, including flow lines, particularly for remediation activities such as hydrate and wax remediation.

An apparatus and method for inserting coiled tubing into a subsea pipeline is described in our co-pending application WO 2010/010326. In that application, an apparatus is described which comprises an adaptor which is releasably couplable to an anchor to hold the adaptor in position against lateral and/or vertical forces, wherein the adaptor has:
i) a first end comprising first coupling means for releasably coupling the adaptor to a riser and an opening through which coiled tubing can extend,
ii) a second end comprising second coupling means for releasably coupling the adaptor to the anchor, and
iii) a curved guide comprising an entrance end facing the opening and an exit end, the curved guide being in communication with the opening such that coiled tubing from the riser can extend through the opening and along the curved guide, the curved guide, in use, guiding the coiled tubing from a substantially vertical orientation at the entrance end to a substantially horizontal or near-horizontal orientation at the exit end.

The apparatus and method described in WO 2010/010326 enable coiled tubing to be inserted into a pipeline for the removal of blockages faster and at a reduced cost compared with known methods of removing a blockage.

The earlier application also describes a transition element and launcher. The launcher is connected to the pipeline and can house a pipeline intervention tool, such as a pig, so that coiled tubing can connect to the tool subsea before the pipeline is accessed. The transition element bridges the gap between the exit of the curved guide and the entrance of the launcher. Where no launcher is required, for example if coiled tubing is being inserted into the pipeline without the need for a pipeline intervention tool, the transition element simply bridges the gap between the exit of the curved guide and the flowline access point.

The transition element is adapted to accommodate one or more of a separation or a vertical, lateral or rotational misalignment between the exit of the curved guide and the entrance to the launcher. A separation may exist between the curved guide and the launcher because the anchor cannot be secured to the sea bed immediately adjacent the launcher. This can be because setting the anchor into the sea bed immediately adjacent the launcher would damage the nearby flowline access point due to its proximity. Additionally, the sea bed may be too rocky in a particular area to allow the anchor to be set there. The anchor may therefore be secured some distance away from the launcher.

A misalignment could arise (i.e. the anchor may not lie along the axis of the flowline at the flowline access point) also because the sea bed is too rocky, but also because, in subsea environments, it can be difficult to position the anchor on the sea bed with a high degree of precision. Alternatively, where the apparatus is used to access a flowline partway along its length, the apparatus may need to be offset from the length of the flowline so as to not interfere with the path of the flowline.

Also, a rotational misalignment can arise between the curved guide and the launcher (i.e. where the central axis through the exit end of the curved guide is at an angle to the central axis through the channel extending through the launcher) when the adaptor is attached to the anchor.

To accommodate for a separation, the transition element may have an adjustable length. It may, for example, comprise an extendable section. To accommodate for vertical, lateral or rotational misalignment, the transition element can include at least a portion that is generally rigid but which is resilient so as to allow flexing along the length thereof. A longer resilient portion can accommodate a greater misalignment, and so the resilient portion can extend substantially along the full length of the transition element. In this way, a misalignment can be accommodated without the use of sharp bends in the transition element, permitting coiled tubing to move along the transition element in a relatively smooth path. It is useful to avoid sharp bends in the transition element so as to reduce friction between the coiled tubing and the transition element.

Where the resilience of the transition element does not permit a sufficient degree of flexing to accommodate the misalignment, the transition element may comprise an adjustable section which allows the exit end of the transition element to be freely adjusted with respect to the exit end of the curved guide of the adaptor. The adjustable section may be made of a flexible material, for example it could be a section of flexible pipe. Alternatively, a flex joint may be included at one or both of the entrance end or the exit end of the transition element so as to allow the orientation of the transition element to be varied. The flex joint could be of the type commonly used in traditional marine riser systems above the lower marine riser package. For example, it may comprise a swivel joint or a universal joint. The MisAligning Flange (MAF), available from Oil States International, Inc. could be used.

In this way, the transition element can bridge the gap between an adaptor and a launcher irrespective of their relative positions.

In an alternative embodiment, the transition element can be purpose built for a given intervention activity. The purpose built transition element is therefore designed to accommodate the separation and vertical, lateral and rotational misalignment between the anchor and the launcher.

Purpose built transition elements are naturally costly and time consuming to make since an individual piece of equipment must be manufactured for each installation. The other concepts disclosed in WO 2010/101326 (adjustable length, resilient portion, flex joint/pipe) teach different features which may be combined to make a transition element. However, particularly where an adjustable length or flex joint/pipe are used, such elements can be complex to make and install subsea, especially where they include moving parts. Further, some assessment of which of the three features are required for a particular installation must be carried out before making/supplying a suitable transition element.

Accordingly, there is still a need for a simple method of coupling the curved guide to the launcher or flowline termination assembly.

The present invention has been made with these points in mind.

According to a first aspect of the invention, a method of making a spool piece for coupling between two subsea connection points comprises the steps of:
i) identifying a location on the sea bed having a pre-defined geometry relative to a first subsea connection point, the pre-defined geometry comprising a curved part between two straight sections, the curved part having a bend radius (R) of between 10m and 20m and an arc length (α) between 55° and 65° and the straight sections each having a length (1) of between 6m and 9m;
ii) positioning a second subsea connection point at or near said location;
iii) measuring the actual geometry of the second subsea connection point relative to the first subsea connection point;
iv) providing a first section of pipe which is straight and has the length (1), a second section of pipe which is straight and is longer than the first section of pipe, and a third section of pipe which comprises a curved part having the bend radius (R) and the arc length (α);
v) comparing the actual geometry of the second subsea connection point relative to the first subsea connection point and the geometry formed if the third section of pipe is coupled between the first section of pipe and the second section of pipe to determine whether the length of the second and/or third sections of pipe should be shortened, and shortening the second and/or third section of pipe if required;
vi) connecting the third section of pipe between the first and second sections of pipe to produce a conduit and providing coupling means on both ends of the conduit thereby forming the spool piece.

According to a second aspect of the invention, a spool piece for coupling between two subsea connection points comprises a conduit having a first end provided with first coupling means and a second end provided with second coupling means, the conduit having a first section of pipe which is straight and has a length of between 6m and 9m, a second section of pipe which is straight and which is at least as long as the first section of pipe, and a third section of pipe which comprises a curved part having a bend radius of between 10m and 20m and an arc length between 55° and 65°, the third section of pipe being connected between the first and second sections of pipe.

The bend radius is the radius of the curve along the central axis of the pipe.

In a situation where a bridge between two connection points is needed to allow coiled tubing to pass from one connection point to the other, such as in the arrangement described in WO 2010/010326, the inventors have found that by controlling the process for installing the connection points in combination with the method of constructing the bridge (i.e. the spool piece), the subsea connection points can be connected simply and quickly. Further, a spool piece having the pre-defined arrangement of straight and curved sections as defined above has been found to be particularly advantageous since it allows coiled tubing to pass there-through with an acceptably low level of drag whilst still permitting an advantageous degree of flexing of the spool piece.

Accordingly, by combining the two processes (i.e. (1) installation of the subsea connection points and (2) construction of the spool piece), the spool piece required to connect the two subsea connection points will always be based on the advantageous pre-defined geometry of the spool piece and so template component parts can be used to construct the spool piece. The construction of the spool piece then involves steps to adjust the template component parts to take account of the actual geometry of the second subsea connection point relative to the first subsea connection point. The actual geometry may vary slightly from the desired pre-defined geometry since it may not be possible to place the second subsea connection point at the desired location due to, for example, rocky terrain.

Accordingly, the same procedure, requiring only a few component parts, can be used to make a spool piece for any number of different situations. In contrast, the transition element taught in WO 2010/010326 in practise requires an assessment of the relative positions of the connection points to be made in order to decide on the appropriate type of transition element.

Once constructed, the spool piece may be installed between the two subsea connection points by lowering the spool piece to the sea bed, using the coupling means at one end of the spool piece to couple said end to one of the subsea connection points, optionally stretching the spool piece so that the other of the coupling means engages the other subsea connection point, and coupling said other coupling means to said other subsea connection point.

In a preferred embodiment, the bend radius (R) is about 12m, the arc length (α) is about 60° and the length (1) of the first section of pipe is about 7.5m. However, slightly broader ranges for these parameters can also be useful, such as a bend radius (R) between 10m and 14m or even 11m and 13m, an arc length (α) between 58° and 62° and a length (1) for the first section of pipe between 7m and 8m.

The pipe sections are preferably made from a material having a modulus of elasticity of between 180MPa and 220MPa, ideally about 200MPa. Advantageously, the pipe sections can be made from steel. Steel has been found capable of providing the desired flexibility whilst providing sufficient strength. Steel is also widely available commercially and can be readily induction bent to the desired curved shape

The pipe sections can be welded together to form the conduit.

The first section of pipe may have been cut from a longer length of pipe in order to form the pipe section having a length between 6m and 9m.

In practise, the third section of pipe may comprise a relatively short straight part adjacent one or both ends of the curved part to aid connection of the third section to the first and second sections of pipe.

In one embodiment, there is a closeable opening through a wall of the conduit of the spool piece. The closeable opening is connectable to a fluid supply for selectively allowing the supply of fluid from the fluid supply to the conduit. In this way, a remediation fluid, such as methanol, monoethylene glycol, triethylene glycol, xylene or paraffin can be supplied to the spool piece when the spool piece is connected into a pipeline entry system.

According to a third aspect of the present invention, a method for carrying out a pipeline intervention comprises the steps of:
i) lowering a launcher to the sea-bed adjacent a flowline termination assembly and coupling the launcher to the flowline termination assembly, the launcher having a channel extending there-through housing a pipeline intervention tool and further having a subsea connection point associated therewith;
ii) making a spool piece in accordance with the first aspect of the invention, and positioning an anchor and an adaptor on the sea bed adjacent the second subsea connection point, the adaptor being coupled to the anchor and having a first end comprising first coupling means and an opening through which coiled tubing can extend, a second end comprising second coupling means and a curved guide comprising an entrance end facing the opening and an exit end, the curved guide being in communication with the opening;
iii) lowering the spool piece to the sea-bed and connecting it to the launcher and to the exit end of the curved guide of the adaptor at the first and second subsea connection points respectively;
iv) deploying a riser from an intervention vessel and connecting the lower end of the riser to the first end of the adaptor using the first coupling means; and
v) deploying coiled tubing down the riser, through the opening in the first end of the adaptor, along the curved guide of the adaptor, through the spool piece and into the launcher and coupling the end of the coiled tubing to the pipeline intervention tool housed in the launcher.

In one embodiment, the method further comprises coupling the launcher to a subsea manifold via a conduit, and
vi) pumping a remediation liquid from a surface storage tank via the subsea manifold, through the conduit to the launcher and then up the riser to a surface container located on the intervention vessel, the surface container having a smaller capacity than the surface storage tank; and
vii) pumping the remediation liquid from the surface container back down the riser to cause the pipeline intervention tool to move through the flowline termination assembly and into a subsea pipeline connected to the flowline termination assembly.

The present invention will now be described, by way of example only, with reference to the following drawings, in which:
Figure 1 is a schematic view of a pipeline entry system;
Figure 2 is a schematic of the intervention vessel shown in Figure 1;
Figure 3 is a cross-section through the launcher shown in Figure 1;
Figure 4 is a view from above of a spool piece according to the present invention;
Figure 5 is a view from above of another spool piece in accordance with the invention.

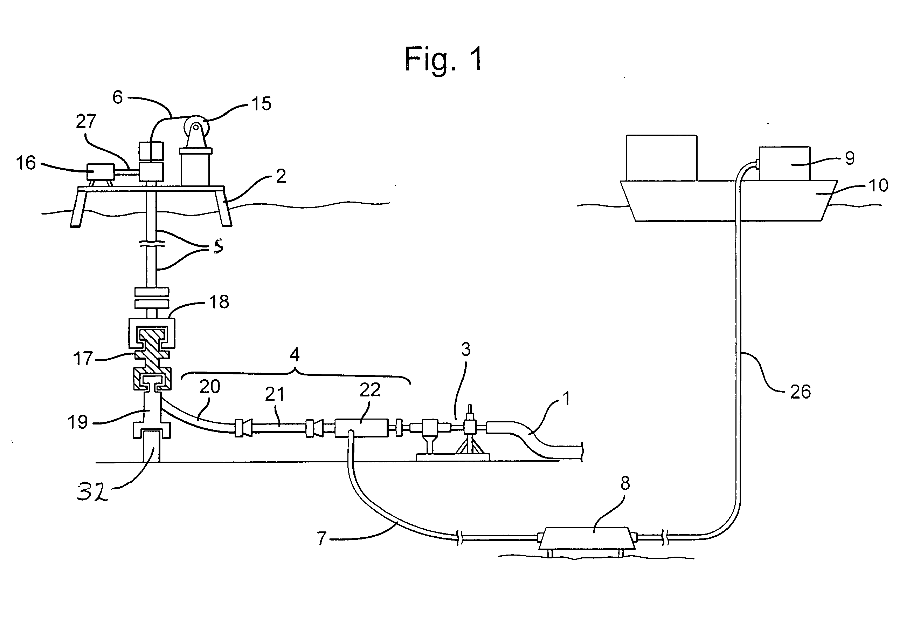

Figure 1 shows a pipeline entry system for removing a blockage, such as a hydrate blockage, in a subsea pipeline 1 using a remediation fluid, for example methanol. It is to be understood that other chemicals, such as monoethylene glycol, triethylene glycol, xylene or parrafin could be used for the treatment of blockages such as hydrate or wax blockages.

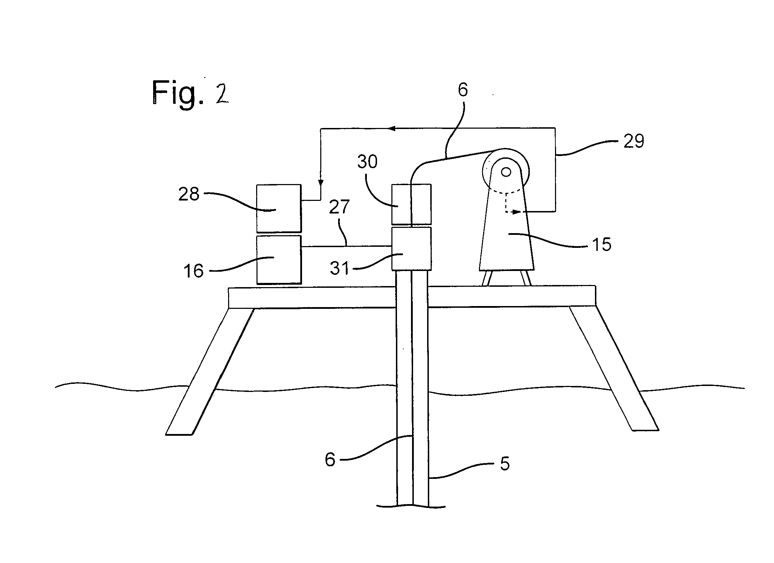

A MODU 2 is located on the surface in the area above a flowline termination assembly (FTA) 3 which is at the end of the pipeline 1. As can be seen in more detail in Figure 2, a surface container 16 is located on the MODU 2 for storing methanol. The surface container 16 may, typically, have a capacity of about 250bbl (39,700 litres). The MODU also has a reel 15 of coiled tubing 6 and injector equipment 30 for injecting the coiled tubing into a riser 5 suspended from the MODU 2. Such injector equipment is well known in the art. A conduit 27, connected to the surface container 16 puts the surface container in fluid communication with the riser 5, for example by way of a surface flow tree 31. A surface flow tree, much like a Christmas tree, is a piece of equipment provided with passages and valves to which two or more conduits may be connected. By appropriate operation of the valves, the conduits may be put in fluid communication or shut off from each other as desired, to permit or prevent fluid flow between the conduits.

A pump (not shown) is provided on the MODU 2 for pumping methanol from the surface container 16 into the riser 5.

The riser 5 is connected at its lower end to an emergency disconnect package (EDP) 18 which is then connected to a lower riser package (LRP) 17. The LRP 17 is itself connected to a pipeline entry system 4. This connection of the riser to the pipeline entry system is similar to the way in which a riser can be connected to a subsea Christmas tree.

The pipeline entry system 4 is similar to that described in our co-pending International application WO 2010/010326, though other pipeline entry systems could alternatively be used.

The pipeline entry system 4 may be pre-existing (put in place when the pipeline was installed) or may have been put in place in order to conduct the pipeline intervention operation in question.

The pipeline entry system 4 comprises an adaptor 19 having a curved guide 20, a spool piece 21 and a launcher 22. The adaptor 19 is connected to an anchor 32, such as a conventional pile, in the sea-bed. The curved guide 20 of the adaptor has a curved passage there-through which is in communication with the upper face of the adaptor 19 so that, in use, coiled tubing can be fed from the riser 5 into the adaptor 19 and through the curved guide 20, thereby being redirected from a generally vertical orientation to a generally horizontal orientation.

The end of the curved guide 20 is connected to one end of the spool piece 21 and the other end of the spool piece is connected to the launcher 22 which can house a pipeline intervention tool 13 during the preparation phase for a pipeline intervention operation. In this way, coiled tubing 6 can be passed down the riser 5, through the curved guide 20 and spool piece 21 and can connect to the intervention tool 13 in the launcher 22 so that it is not necessary to pass the tool 13 itself down the riser 5. The pipeline intervention tool 13 may be of the kind described in WO 03/067016, or any other suitable intervention tool. The launcher 22 is coupled in turn to the FTA 3 by way of a suitable flowline connector, such as the STABCON product from FMC Technologies.

An umbilical 7 puts the pipeline entry system 4 in fluid communication with a subsea manifold 8. Production fields typically include at least one manifold and so the system can simply make use of the existing infrastructure. In this embodiment, the umbilical 7 is connected to the launcher 22. However, the umbilical 7 could be connected instead to the spool piece 21, the curved guide 20, or indeed a piece of equipment specifically designed to connect in line with the parts of the pipeline entry system and to receive the umbilical, provided that the part to which the umbilical is to be connected is adapted to have the connectors and valves discussed below with respect to the launcher.

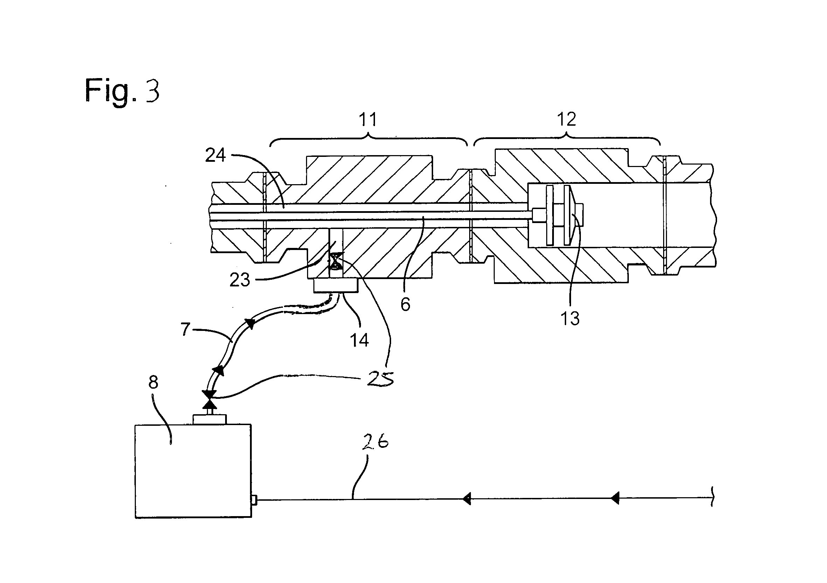

The way in which the umbilical 7 connects the subsea manifold 8 and the pipeline entry system 4 is shown in more detail in Figure 3. The launcher 22 has two sections; a tool housing section 12 and an umbilical receiving section 11. Alternatively, the two sections 11,12 could be integral. The pipeline intervention tool 13 can be located in the tool housing section 12. The umbilical receiving section 11 is provided with a suitable subsea connector 14 for connecting to the umbilical 7. Subsea connectors are well known in the art, for example a hot stab could be used. A conduit 23 extends between the connector 14 and the passage 24 through the launcher 22 to allow fluid to flow from the umbilical 7 into the launcher 22. Valves 25 on the manifold 8 and launcher 22 can be opened or closed as appropriate to allow flow of methanol or to shut off flow of methanol from the manifold 8 to the launcher 22.

The manifold 8 is connected by way of a further umbilical 26 to an FPSO 10 on which there is a surface storage tank 9 for storing methanol. The tank typically has a capacity of 26,000bb1 (4,100,000 litres) of methanol. A pump (not shown) on the FPSO 10 is capable of pumping methanol from the surface storage tank 9 to the manifold 8.

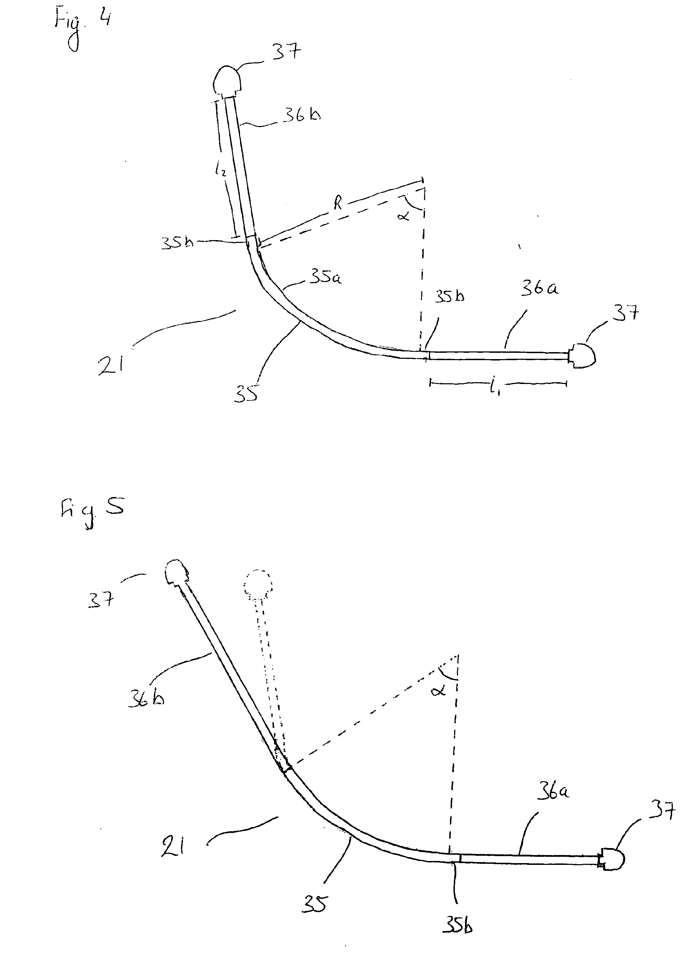

The spool piece 21 of the pipeline entry system can be seen in more detail in Figures 4 and 5. As discussed above, the spool piece 21 connects the curved guide 20 of the adaptor 19 to the launcher 22. The preferred geometry of the spool piece is shown in Figure 4. This is also termed the pre-defined geometry. A first section of pipe 36a, which is generally straight and has a length (l₁) of about 7.5m is connected at one of its ends to one end of a third section of pipe 35 which comprises a curved part 35a, the curved part having an arc length (α) of about 60° and a bend radius (R) of about 12m. The other end of the third section of pipe 35 is connected to an end of a second section of pipe 36b, which is generally straight and also has a length (l₂) of about 7.5m. The third section of pipe 35 also comprises relatively short straight parts of pipe 35b about 50cm long on either side of the curved part 35a to facilitate connection of the third section of pipe 35 to the first 36a and second 36b sections pipe.

The sections of pipe are made of steel and preferably have a 5" (12.7cm) bore. The steel typically has a modulus of elasticity of about 200Mpa. The third section of pipe 35 is made by induction bending a straight piece of pipe. The sections of pipe are connected together by welding to form a conduit. Connecting means 37, such as the Stabcon connector available from FMC Technologies, are provided on either end of the conduit.

This spool piece has been found to be particularly suitable for use with a pipeline intervention system such as that described in WO 2010/010326 since coiled tubing is able to pass there-through without an unacceptable level of drag, yet the spool piece also has a level of flexibility which enables it to bend and stretch. Bending and stretching of the spool piece is beneficial not only so that the spool piece can be manipulated into engagement with the curved guide and the launcher, as discussed in more detail below, but also so that thermal expansions/contractions can be accommodated by the spool piece. Such thermal expansions/contractions may arise for example if the pipeline to which the pipeline entry system is connected is shut down. As production stops, the temperature in the pipeline drops and the pipeline contracts. Conversely, when production starts again, the temperature in the pipeline increases and the pipeline expands.

In other embodiments, the dimensions of the component parts may vary slightly, for example the first 36a and second 36b sections of pipe may be between 6m and 9m long and the third section of pipe 35 may comprise a curved part 35a having an arc length (α) between 55° and 65° and a bend radius between 10m and 20m, and the straight parts 35b on either side of the curved part 35a may be absent or may be up to 1m long.

According to the present invention, it is aimed to locate a second subsea connection point on the sea bed such that its position/geometry relative to a first subsea connection point matches the pre-defined geometry of the spool piece 21 shown in Figure 4. In this way, the spool piece 21 can connect two pieces of equipment (curved guide 20 and launcher 22) and allow coiled tubing to efficiently pass there-through. However, it may not be possible to locate the second subsea connection point in the desired location i.e. in a position relative to the first subsea connection point which would have the same geometry as the pre-defined spool piece. This may be because the terrain at the desired location is unsuitable for the second subsea connection point. For example, the sea bed may be rocky or uneven. In this case, the second subsea connection point is positioned as near as practicable to the desired location, for example slightly behind or to the side of the desired location.

The invention provides for the spool piece 21 to be easily modified from the pre-defined geometry so that greater variation between the actual location and the desired location of the second subsea connection point can be accommodated. Specifically, the first 36a, second 36b and third 35 sections of pipe are provided separately so that they can be connected together to construct the spool piece 21. The second section of pipe 36b is longer than the first section of pipe 36a so that, if appropriate, the spool piece 21 may be longer than the pre-defined geometry. Accordingly, a first part of the second section of pipe 36b is about the same length as the first section of pipe 36a, and a second part of the second section is about 5m long, though the second part may have other lengths from 0.5 to 10m, such as between 3.5m and 6.5m. It is to be understood that the first and second parts of the second section of pipe are integral. The second part of the second section of pipe 36b is therefore removed, for example by cutting, to form a spool piece 21 having the pre-defined geometry shown in Figure 4, or it may just be shortened, thereby forming a spool piece which is longer than the spool piece having the pre-defined geometry.

Additionally, the method of the present invention provides for the third section of pipe 35 to be shortened. In other words, the arc length (α) may be reduced. For example, the arc length (α) may be reduced by 1°, or 2° or up to 5°. In this way, additional variation between the actual location and the desired location of the second subsea connection point can be accommodated.

Figure 5 shows another spool piece 21 according to the invention. This spool piece 21 is constructed with an actual geometry different to the pre-defined geometry. In particular, the third section of pipe 35 has been shortened during construction of the spool piece 21 so that it has an arc length (α) of about 58°. It will be understood that this consequently means that the straight section 35b has been removed from the end of the third section 35 which has been shortened. Additionally, the second part of the second section of pipe 36b has been shortened during construction of the spool piece so that it has a length of 1.2m rather than 5m. The second section of pipe 36b is therefore about 8.5m long in total. For illustrative purposes, the spool piece 21 of Figure 4, i.e. having the pre-defined geometry, is shown in broken lines in Figure 5. It can be seen that part of the spool pieces are identical.

It can be seen from the above that the geometry of the spool piece 21 not only permits coiled tubing to be passed there-through with an acceptably low level of drag, but it also allows the spool piece 21 to accommodate thermal expansions and/or contractions in the system and be stretched out to form a bridge between the two subsea connection points. This stretching out of the spool piece further reduces the radius of curvature beyond its "at rest" radius of curvature, which means that friction/drag, as coiled tubing passes through the spool piece, is usefully reduced even further.

The pipeline entry system is installed by first positioning the launcher 22 adjacent the FTA 3 and coupling the launcher to the FTA. A location on-the sea bed is then identified which is separated from the first connection point by the pre-defined geometry. The first connection point is the connector on the free end of the launcher. The anchor 32 is next set in the sea-bed as is well known in the art and the adaptor 19 is coupled to the anchor 32 such that the exit end of the curved guide 20 lies at the location identified. It is to be understood that the end of the curved guide 20 is unlikely to lie on the sea bed, but will instead likely be at some height above the sea bed generally vertically above the location on the sea bed. The adaptor 19 is oriented such that the central axis through the curved guide 20 will align with the central axis through the spool piece 21 once the spool piece is connected to the curved guide 20.

The relative positions of the end of the curved guide 20 and the connector on the launcher 22 are determined precisely using subsea metrology, for example using Smart Wire Metrology developed by the Norwegian Geotechnical Institute and Deep Water Solutions. At a remote location, likely on land, the components of the spool piece, namely the first 36a, second 36b and third 35 sections of pipe and the two connectors 37, are brought together. If the relative positions of the end of the curved guide 20 and the connector on the launcher 22 match the pre-defined geometry, then the second part of the second section of pipe 36b is removed so that the length of the second section of pipe 36b is about 7.5m. The third section of pipe 35 is then welded between the first 36a and second 36b sections of pipe and a connector 37 is welded to each end.

If the relative positions of the end of the curved guide 20 and the connector on the launcher 22 do not match the pre-defined geometry, but a spool piece having the pre-defined geometry can be stretched out to accommodate the difference, then spool piece is made with the pre-defined geometry. If the relative positions of the end of the curved guide 20 and the connector on the launcher 22 vary more significantly from the pre-defined geometry, for example if the actual geometry is longer than the pre-defined geometry, then the spool piece 21 is constructed to have a longer seconed section of pipe 36b (by retaining some of the second part of the second section of pipe) and/or a shorter third section of pipe 35 (i.e. by reducing the arc length (α) of the third section of pipe).

Once it is fabricated, the spool piece 21 is lowered between the adaptor 19 and the launcher 22. There is initially little load on the spool piece 21 and so it is at rest, as depicted by broken lines in Figure 5b. The spool piece is then manipulated, including being stretched if necessary, into engagement with the curved guide 20 of the adaptor 19 and with the launcher 22. This can be achieved subsea using a remotely operated vehicle (ROV) with remotely operated tooling (ROT) which engages each end of the spool piece 21 in turn and attaches it to the curved guide 20 and the launcher 22 respectively.

Accordingly, a spool piece 21 is fabricated which is suitable to meet the geometric requirements of the specific situation, allow coiled tubing to pass there-through without an unacceptable level of drag, and still respond to temperature changes by expanding or contracting. Despite these advantages being achieved, the method of fabricating the spool piece is very easy and quick.

Once the components of the pipeline entry system 4 (i.e. the launcher 22, spool piece 21 and adaptor 20) are connected up to the FTA 3, the riser 5, suspended from the MODU 2, is connected to the adaptor 20. In addition, the umbilical 7 is connected between the launcher 22 and the pre-existing subsea manifold 8, which is in turn in communication with the methanol storage tank 9 on the FPSO 10.

In a preferred embodiment, the surface container 16 on the MODU 2 is initially primed with methanol from a surface supply, such as a separate container located on the MODU or by transfer from a supply vessel.

Coiled tubing 6 is deployed from the MODU 2 down the riser 5, into the pipeline entry system 4. Before connecting the coiled tubing 6 to the pipeline intervention tool 13, the system is flushed with methanol to remove sea water. This is achieved by pumping methanol from the surface container 16 down the annulus between the riser 5 and the coiled tubing 6 and then back up the coiled tubing. Seawater in the return fluid from the coiled tubing can be returned to the sea whereas when methanol comes through in the return fluid, it is fed via a further conduit 29 from the coiled tubing 6 to a returns container 28 on the MODU 2 as seen in Figure 2. The volume of liquid needed in this flushing step is relatively small and so the returns container 28 can be the same size as the methanol surface container 16, namely about 250bbl (39,700 liters).

It will be appreciated that this flushing of the riser annulus and coiled tubing can be achieved without priming the surface container 16 from a surface vessel, since methanol could alternatively be pumped from the FPSO 10 via the manifold 8, into the pipeline entry system 4 and up the riser annulus and coiled tubing.

The coiled tubing 6 is next connected to the intervention tool 13 located in the launcher 22.

The system is now ready to carry out a pipeline intervention operation. If there is any methanol left in the surface container 16, methanol can be pumped from the surface down to the pipeline 1. Accordingly, the valve on the FTA 3 is opened to allow access into the pipeline 1. The pump on the MODU 2 is activated so as to pump methanol into the annulus between the riser 5 and the coiled tubing 6. The flow rate and pressure of the methanol being pumped down the riser annulus is synchronised with the spooling operation of the coiled tubing 6 so that the progression of the pipeline line intervention tool 13 and the coiled tubing 6 is matched. Thus, the intervention tool 13 and the coiled tubing 6 move out of the launcher 22, through the FTA 3 and into the pipeline 1, the pressure of the methanol behind the pipeline intervention tool 13 driving the tool 13 and the attached coiled tubing 6 further into the pipeline 1. As the intervention tool and coiled tubing progress into the pipeline, the fluid already in the pipeline is displaced and passes up the inside of the coiled tubing to the surface. This return stream can be directed to the returns container 28 on the MODU 2 and separated into gas, oil, water and methanol streams with the recovered methanol being transferred to the surface container 16 for re-use and flaring of gas and/or oil where appropriate.

The intervention tool 13 and coiled tubing 6 progress into the pipeline 1 until the methanol supply from the surface container 16 has run out.

At this stage, the intervention tool 13 has moved a given distance into the pipeline 1, but may not yet have reached the blockage. The methanol supply in the surface container 16 must therefore be replenished. Accordingly, the pump on the MODU 2 is switched off, the isolation valves on the launcher 22 and manifold are opened and the pump on the FPSO 10 is activated in order to pump methanol from the surface storage tank 9 on the FPSO 10, via the subsea manifold 8, into the launcher 22, through the pipeline entry system 4 and up the annulus between the riser 5 and the coiled tubing 6 to the surface container 16. The surface container is filled in this manner. In the event the methanol fluid pressure from the FPSO is high enough to open the check valves on the intervention tool, methanol flow towards the pipeline, and resulting movement of the intervention tool, is avoided by closing the return path up the coiled tubing at the surface. Preventing the methanol which is flowing directly from the manifold from causing the intervention tool to move into the pipeline is useful since it is beneficial to control the methanol delivery to the pipeline from the MODU. As discussed above, this is because methanol delivery and coiled tubing deployment can then be synchronised.

Once the surface container 16 is filled, the valve on the surface flow tree 31 is closed then the valves on the launcher 22 and manifold are closed, thereby isolating the launcher from the manifold, and the pump on the FPSO 10 is switched off.

The flow of methanol is then reversed once again by activating the pump located on the MODU 2 to pump methanol down the riser. This cycle of pumping methanol from the FPSO to the surface container, via the manifold, and then from the surface container to the pipeline is repeated until the intervention tool 13 arrives at the blockage.

In this way, the intervention tool 13 is driven into the pipeline 1 in increments until it reaches the blockage, at which point the tool 13 can inject methanol against the blockage to remove the blockage.

After the blockage is removed, the intervention tool 13 and coiled tubing 6 are withdrawn using the coiled tubing injector on the MODU to pull the coiled tubing out of the pipeline. If necessary, for example if the coiled tubing extends a great length into the pipeline, additional pulling assistance can be provided by reverse thrusting the intervention tool 13. Accordingly, methanol is pumped down the inside of the coiled tubing 6. It will be understood that appropriate valving can be incorporated at the surface to allow methanol to be pumped from the surface container 16 down the inside of the coiled tubing, as will be apparent to one of skill in the art.

Once the coiled tubing has been withdrawn from the pipeline, the riser 5, coiled tubing 6 and pipeline entry system 4 can be circulated with nitrogen or seawater, taking returns up the riser to the returns container 28. The pipeline entry system 4 is isolated from the pipeline and the field started up. Methanol in the pipeline can flow to the FPSO where it can be processed.

Remotely operated vehicles (ROVs) can be used to carry out the subsea operations such as connecting the umbilical between the manifold and the launcher, and opening/closing the subsea valves.

Various modifications to the invention will be apparent to the person skilled in the art. For example, although the curved part of the third section of pipe is preferably generally planar, it may alternatively be helical. Other types of pipeline intervention tools may be used, such as tractors available from Western Well Tool, Welltec, Aker Solutions or Durham Pipeline Technology. Also, the pipeline entry system may be any suitable system and need not be configured as described in WO 2010/010326. In one alternative, the surface container may be provided on a different vessel to the coiled tubing reel. In this case, it is likely that the injector equipment for injecting coiled tubing into the riser would be on the same vessel as the surface container, to avoid the need for vessel to vessel transfer of the remediation liquid.

## Claims

1. A method of making a spool piece for coupling between two subsea connection points comprising the steps of:
i) identifying a location on the sea bed having a pre-defined geometry relative to a first subsea connection point, the pre-defined geometry comprising a curved part between two straight sections, the curved part having a bend radius (R) of between 10m and 20m and an arc length (α) between 55° and 65° and the straight sections each having a length (1) of between 6m and 9m;
ii) positioning a second subsea connection point at or near said location;
iii) measuring the actual geometry of the second subsea connection point relative to the first subsea connection point;
iv) providing a first section of pipe which is straight and has the length (1), a second section of pipe which is straight and is longer than the first section of pipe, and a third section of pipe which comprises a curved part having the bend radius (R) and the arc length (α);
v) comparing the actual geometry of the second subsea connection point relative to the first subsea connection point and the geometry formed if the third section of pipe is coupled between the first section of pipe and the second section of pipe to determine whether the length of the second and/or third sections of pipe should be shortened, and shortening the second and/or third section of pipe if required; and
vi) connecting the third section of pipe between the first and second sections of pipe to produce a conduit and providing coupling means on both ends of the conduit thereby forming the spool piece.

2. The method of claim 1, wherein the bend radius (R) is between 10m and 14m, the arc length (α) is between 58° and 62° and the length (1) is between 7m and 8m.

3. The method of claim 1 of claim 2, wherein the third section of pipe further comprises a straight part on either side of the curved part.

4. A spool piece for coupling between two subsea connection points comprising a conduit having a first end provided with first coupling means and a second end provided with second coupling means, the conduit having a first section of pipe which is straight and has a length of between 6m and 9m, a second section of pipe which is straight and which is at least as long as the first section of pipe, and a third section of pipe which comprises a curved part having a bend radius of between 10m and 20m and an arc length between 55° and 65°, the third section of pipe being connected between the first and second sections of pipe.

5. The spool piece of claim 4, wherein the bend radius is between 10m and 14m, the arc length (α) is between 58° and 62° and the length of the first section of pipe is between 7m and 8m.

6. The spool piece of claim 4 or claim 5, wherein the first, second and third sections of pipe are made from steel having a modulus of elasticity between 180MPa and 220MPa.

7. The spool piece of any one of claims 4 to 6, in which the third section of pipe is two-dimensional.

8. A spool piece as claimed in any one of claims 4 to 7, further comprising a closeable opening through a side wall of the conduit which is connectable to a fluid supply for selectively allowing the supply fluid from the fluid supply to the conduit.

9. A pipeline intervention method comprising the steps of:
i) lowering a launcher to the sea-bed adjacent a flowline termination assembly and coupling the launcher to the flowline termination assembly, the launcher having a channel extending there-through housing a pipeline intervention tool and further having a subsea connection point associated therewith;
ii) making a spool piece in accordance with any one of claims 1 to 3, and positioning an anchor and an adaptor on the sea bed adjacent the second subsea connection point, the adaptor being coupled to the anchor and having a first end comprising first coupling means and an opening through which coiled tubing can extend, a second end comprising second coupling means and a curved guide comprising an entrance end facing the opening and an exit end, the curved guide being in communication with the opening;
iii) lowering the spool piece to the sea-bed and connecting it to the launcher and to the exit end of the curved guide of the adaptor at the first and second subsea connection points respectively;
iv) deploying a riser from an intervention vessel and connecting the lower end of the riser to the first end of the adaptor using the first coupling means; and
v) deploying coiled tubing down the riser, through the opening in the first end of the adaptor, along the curved guide of the adaptor, through the spool piece and into the launcher and coupling the end of the coiled tubing to the pipeline intervention tool housed in the launcher.

10. The method of claim 9, further comprising coupling the launcher to a subsea manifold via a conduit, and
vi) pumping a remediation liquid from a surface storage tank via the subsea manifold, through the conduit to the launcher and then up the riser to a surface container located on the intervention vessel, the surface container having a smaller capacity than the surface storage tank; and
vii) pumping the remediation liquid from the surface container back down the riser to cause the pipeline intervention tool to move through the flowline termination assembly and into a subsea pipeline connected to the flowline termination assembly.
